Europäisches Patentamt

European Patent Office

Office européen des brevets

(19)

(11) Veröffentlichungsnummer: **0 056 435**
**B1**

(12) # EUROPÄISCHE PATENTSCHRIFT

(45) Veröffentlichungstag der Patentschrift:
29.05.85

(21) Anmeldenummer: **81108655.2**

(22) Anmeldetag: **21.10.81**

(51) Int. Cl.⁴: **B 01 J 37/02,** B 01 J 35/04,
F 01 N 3/10

(54) **Katalysatorkörper.**

(30) Priorität: **12.01.81 DE 3100658**

(43) Veröffentlichungstag der Anmeldung:
**28.07.82 Patentblatt 82/30**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**WO - A - 79/00611**
**DE - B - 1 192 624**
**US - A - 4 058 485**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Cyron, Theo, Hüttenfeld 1, D-5060 Bergisch Gladbach 3 (DE)**

(74) Vertreter: **Mehl, Ernst, Dipl.-Ing. et al, Postfach 22 01 76, D-8000 München 22 (DE)**

**Beschreibung**

Die vorliegende Erfindung betrifft einen spiralig gewickelten Katalysatorkörper aus profilierten Blechbändern aus hochtemperaturbeständigen Werkstoffen sowie Verfahren zum Herstellen. Diese Katalysatorkörper werden mit einem Katalysatormaterial beschichtet und sind insbesondere vorgesehen für Gase bei hohen Temperaturen, beispielsweise zur Nachbehandlung von Abgasen aus Kraftfahrzeug-Verbrennungsmotoren. Katalysatorkörper zur Behandlung von Abgasen aus nicht stationären Verbrennungskraftmaschinen sollen nicht nur aus Preis- und Gewichtsgründen einen geringen Materialverbrauch haben, sondern müssen auch aus Platzgründen sehr viel Katalysatormaterial auf geringem Raum zulassen und dennoch einen ausreichenden Querschnitt für die durchtretenden Gase freilassen. Außerdem müssen sie den mechanischen Beanspruchungen standhalten, die einerseits von den ständigen Erschütterungen im Betrieb verursacht werden und andererseits von den Druckwellen, die zwangsläufig im Abgasstrom einer Verbrennungskraftmaschine gegeben sind.

Beim Löten von sehr dünnen Blechen mit einer Wandstärke von 0,04 mm oder noch weniger traten bisher Schwierigkeiten auf, weil die üblichen Lötpasten in einem Bindemittel Lötkörper enthalten, deren Durchmesser üblicherweise 0,01 bis 0,1 mm beträgt, und die aufgetragene Schicht der Lötpaste zwangsläufig wesentlich dicker ist als der angegebene größte Durchmesser der Lötkörner. Im Bereich der zu lötenden Flächen ist daher die Materialmenge des Lötwerkstoffes wesentlich größer als die Materialmenge des angrenzenden dünnwandigen Bleches.

Es kommt daher durch Diffusion zum Auflegieren der wesentlich geringeren Werkstoffmenge des Bleches mit der bedeutend größeren Menge des Lötmaterials an der Lötstelle, wodurch die mengenmäßig geringeren Anteile des Blechwerkstoffes sich in der mengenmäßig größeren Lötschmelze lösen und zum Ausschmelzen des dünnwandigen Bleches führen. Insbesondere bei Anhäufung mehrerer dicker Lötkörner entstehen dann im dünnwandigen Blech Löcher, die naturgemäß die örtliche Festigkeit erheblich stören. Auch wenn man die üblichen Lötpasten sehr sorgfältig und nur in einer sehr dünnen Schicht auftragen würde, so läßt sich doch nicht vermeiden, daß an Blechkanten oder in Ecken und Spalten größere Mengen an Lötpaste zurückbleiben, die ebenfalls das bereits erwähnte Schmelzen des dünnwandigen Bleches und damit Löcher an den Lötstellen bewirken, anstatt wie beabsichtigt, diese Bleche miteinander zu verbinden.

In der deutschen Patentschrift 1 192 624 ist beschrieben »ein Verfahren zur Herstellung von Katalysatoren, bei dem man einen Grundkörper durch spiraliges Aufwickeln der aus hochtemperaturfester Legierung bestehenden Streifen bildet, mit einem gleiche Metalle wie die Legierung enthaltenden Pulver oder einer solchen Paste überzieht und dann bis zum Verschmelzen aller Kontaktstellen der aufeinanderliegenden flachen und geriffelten Streifen erhitzt und den entstandenen scheibenförmigen Körper mit einer dünnen Schicht eines Edelmetalls in bekannter Weise überzieht«. Aus den Figuren ist ersichtlich, daß ein sinus- oder dreieckförmig gewelltes Metallband zusammen mit einem flachen Metallband spiralig aufgewickelt und miteinander verlötet werden soll. Bei der Anwendung des damaligen Verfahrens auf die heutzutage gewünschten sehr dünnwandigen Bleche der vorliegenden Erfindung würden die bereits oben beschriebenen Nachteile auftreten. Als weiterer Nachteil des damaligen Verfahrens erscheint, daß das Lötmittel anscheinend auf der gesamten Blechoberfläche aufgetragen wird und damit den späteren Kontakt des Bleches mit einem Katalysatormaterial behindert. Außerdem führt die nicht begrenzte Auftragung eines Lötmittels bei den sehr dünnen Blechen der vorliegenden Erfindung zu einer erheblichen Anhäufung von Material und damit zu einer höchst unerwünschten Verringerung des freien Kanalquerschnitts.

Aufgabe der vorliegenden Erfindung ist ein Katalysatorkörper, insbesondere zur Behandlung von Abgasen aus Verbrennungsmaschinen und geeignete Verfahren zum Herstellen. Diese Katalysatorkörper sollen in großen Stückzahlen schnell und preiswert herstellbar sein. Eine spezielle Aufgabe der vorliegenden Erfindung ist ein Katalysatorkörper aus Blechbändern, die kontinuierlich mit Verbindungsmaterial oder auch Trägermaterial für das Katalysatormaterial beschichtet und aufgewickelt werden.

Das Verfahren nach dem ersten Anspruch benutzt einen hochtemperaturbeständigen Klebstoff auf keramischer Basis, wie er zur Zeit von verschiedenen Firmen unter der Sammelbezeichnung »Hochtemperatur-Klebstoff« angeboten wird.

In einer besonderen Ausführung der Erfindung kann dieser Klebstoff in wässerigen oder sonstigen Suspensionen auf den erhabenen Stellen eines profilierten, z. B. gewellten Blech-Bandes, aufgetragen werden, so daß man mit Hilfe der Konzentration und durch anschließendes Trocknen nahezu jede gewünschte Schichtstärke erreichen kann. Nach dem Trocknen kann dieser Klebstoff durch Erhitzen auf mäßige Temperaturen ausgehärtet werden. Überraschenderweise verträgt ein aus sehr dünnwandigen Blechbändern gewickelter Katalysatorkörper, der mit einem solchen Klebstoff verbunden ist, die oben bereits erwähnten mechanischen Beanspruchungen. Dabei ist vermutlich von wesentlicher Bedeutung, daß die verwendeten Bleche sehr dünnwandig sind und ein sehr engmaschiges Netz bilden, so daß Temperaturunterschiede schnell ausgeglichen werden und die durch unterschiedliche Temperaturen verursachten unterschiedlichen Ausdehnungen durch geringe Verformung der dünnwandigen Bleche ausgeglichen werden. Selbst wenn einzelne Verbindungsstellen reißen sollten, haftet das Verbindungsmaterial weiterhin an den Metalloberflächen und bildet eng ineinander verzahnte Berührungsflächen, die die im wesentlichen axialen Kräfte übertragen und nicht ausweichen können, weil die spiralig aufgewickelten Blechbänder durch das äußere Mantelrohr zusammengehalten werden.

Im dritten Anspruch wird ein Verfahren vorgeschlagen, mit dem die Blechbänder kontinuierlich und mit sorgfältig bestimmbarer Schichtdicke beschichtet werden können. Die in einem solchen Fall ebenfalls denkbaren Tauchverfahren für die bereits gewickelten Körper führen zwangsläufig zu unterschiedlichen Schichtdicken, weil insbesondere beim Austauchen an den unteren Rändern mehr flüssiges Material haften bleibt, als am oberen Ende. Beim vorliegenden Verfahren jedoch kann durch unterschiedliche Konzentrationen der flüssigen Materialien und zwischenzeitliches Trocknen der Blech-Bänder nahezu jede gewünschte Schichtdicke gleichmäßig aufgetragen werden.

Im vierten Anspruch wird vorgeschlagen, nach dem Verfahren aus dem dritten Anspruch auch das Trägermaterial für das katalytisch wirksame Material aufzubringen. Auch hier kann man durch Behälter mit unterschiedlichen Inhalten und zwischenzeitliches Trocknen die Schichtdicke und auch die Zusammensetzung der Schicht beeinflussen.

Im fünften Anspruch wird vorgeschlagen, ein inaktives körniges Material aufzutragen, das nur dazu dient, die spätere katalytisch wirksame Oberfläche aufzurauhen und zu vergrößern.

Im sechsten Anspruch ist eine bereits oben beschriebene Einzelheit des Verfahrens dargestellt.

Im Anspruch 7 sind die mit den bereits beschriebenen Verfahren erreichbaren Endprodukte dargestellt.

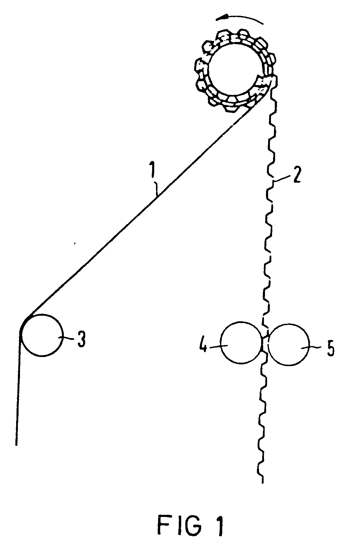

Die Fig. 1 bis 4 zeigen eine Anlage zur Durchführung der erfindungsgemäßen Verfahren sowie einen fertigen Katalysatorkörper mit einem stark vergrößerten Ausschnitt daraus.

Ein besonderer Vorteil des erfindungsgemäßen Katalysatorkörpers ist, daß das für seine Festigkeit notwendige Mantelrohr weder mit Verbindungs- noch mit Katalysatormaterial beschichtet ist. Daher kann es später ohne aufwendige Reinigungsverfahren unmittelbar mit den anschließenden Rohrleitungen verschweißt werden.

In Fig. 1 wird ein ebenes Blechband (1) und ein etwa trapezförmig gewelltes Blechband gemeinsam aufgewickelt. Dabei wird das ebene Blechband (1) über eine Umlenkwalze (3) geleitet und das gewellte Blechband (2) zwischen zwei Walzen (4 und 5) hindurchgeleitet, die das Blechband (2) an seinen erhabenen Stellen mit einem flüssigen Klebstoff beschichten. Im Inneren der aufgewickelten Blechbänder ist ein Hohlraum dargestellt, der aber tatsächlich, wie später noch ausgeführt wird, im wesentlichen durch aufgewickelte Blechbänder ausgefüllt ist.

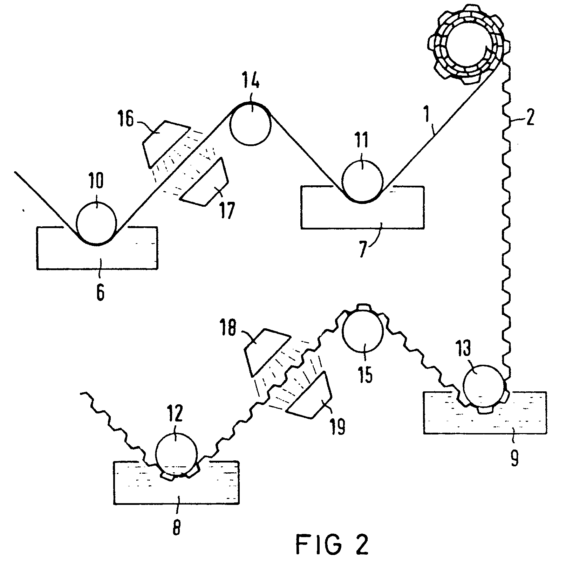

In Fig. 2 werden die Blechbänder (1 und 2) wie in Fig. 1 aufgewickelt, sie werden aber vor dem Aufwickeln jeweils durch zwei Behälter (6 und 7) bzw. (8 und 9) geleitet und darin mit einem flüssigen Klebstoff beschichtet. Zur Führung in diesen Behältern dienen die Walzen (10 und 11 bzw. 12 und 13), während zwischen den Behältern jeweils eine Umlenkwalze (14 bzw. 15) angeordnet ist. Zwischen den Walzen (10 und 14) sind ober- und unterhalb des Blech-Bandes (1) Heizkörper (16 und 17), beispielsweise nach dem Infrarot-Prinzip angeordnet, die den auf dem Blechband (1) aufgetragenen Klebstoff trocknen. In gleicher Weise wird auch das Blechband (2) von den Heizkörpern (18 und 19) getrocknet. Nach dem Austritt aus den Behältern (7 und 9) sind ebenfalls Heizkörper zur Trocknung zweckmäßig, sie sind aber in der Fig. 2 zur Vereinfachung der Darstellung weggelassen. Es liegt im Rahmen der Erfindung, wenn nur eins der beiden Blechbänder (1 oder 2) beschichtet wird oder die Anzahl der dargestellten Behälter und Heizkörper vergrößert oder verringert wird.

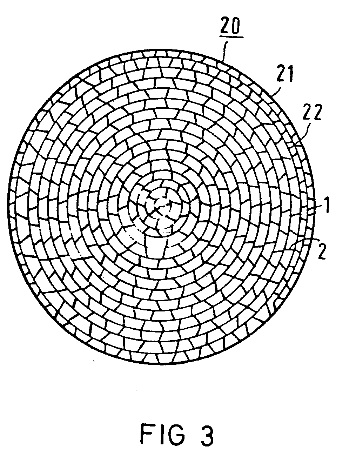

Fig. 3 zeigt einen fertig gewickelten Katalysatorkörper (20) bestehend aus den spiralig aufgewickelten Blechbändern (1 und 2) und einem äußeren, zylindrischen Mantelrohr (21), das die aufgewickelten Blechbänder zusammenhält.

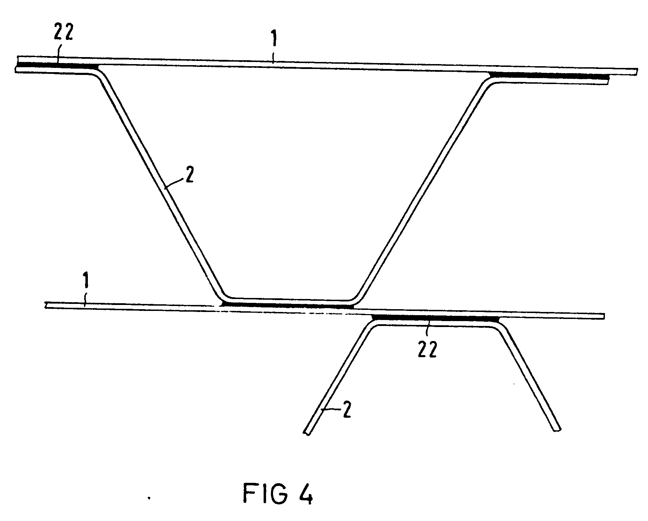

Fig. 4 zeigt einen stark vergrößerten Ausschnitt aus Fig. 3, bei dem die Blechbänder (1 und 2) über den Klebstoff (22) verbunden sind. Aus Gründen der einfacheren Darstellung sind die Blechbänder (1) mit geraden Linien dargestellt. Tatsächlich haben sie nach dem Aufwickeln eine Krümmung entsprechend dem beim Aufwickeln von innen nach außen zunehmenden Krümmungsdurchmesser.

**Patentansprüche**

1. Verfahren zum Herstellen von spiralig gewickelten Katalysatorkörpern aus profilierten Blechbändern aus hochtemperaturbeständigen Werkstoffen, gekennzeichnet durch folgende Merkmale:

a) Die Blechbänder werden vor dem Aufwikkeln mit einem hochtemperaturbeständigen Klebstoff beschichtet,

b) die Blech-Bänder werden spiralförmig aufgewickelt bis zu einem bestimmten Außendurchmesser,

c) die Blech-Bänder werden abgeschnitten und geheftet,

d) die aufgewickelten Blechbänder werden in einem Mantelrohr von bestimmtem Innendurchmesser fixiert,

e) der Klebstoff wird durch Erhitzen ausgehärtet.

2. Verfahren nach Anspruch 1, dadurch gekennzeichnet, daß der Klebstoff auf die erhabenen Stellen der profilierten Blechbänder aufgetragen wird.

3. Verfahren nach Anspruch 1, mit folgenden Merkmalen:

a)  Die Blechbänder werden vor dem Aufwickeln durch ein oder mehrere Behälter geführt, in denen der Klebstoff in flüssiger Form vorhanden ist.

4. Verfahren nach Anspruch 3 mit folgenden Merkmalen:

a)  Die Blech-Bänder werden durch einen Behälter geführt, der in flüssiger Form ein Trägermaterial für das katalytisch wirksame Material enthält.

5. Verfahren nach Anspruch 3 mit folgenden Merkmalen:

a)  Die beiden Blech-Bänder werden durch einen Behälter geführt, der in einer Flüssigkeit ein körniges Material als Aufschlämmung enthält.

6. Verfahren nach Anspruch 3 mit folgenden Merkmalen:

a)  Nach dem Austritt aus einem Behälter werden die Blech-Bänder getrocknet.

7. Katalysatorkörper, herstellbar durch ein Verfahren nach einem der Ansprüche 1 bis 6.

## Claims

1. A process for the production of spirally wound catalyst bodies which consist of profiled sheet metal strips made of materials which are resistant to high temperatures, characterised by the following features:

a)  prior to winding, the sheet metal strips are coated with an adhesive which is resistant to high temperatures,

b)  the sheet metal strips are spirally wound to a predetermined outer diameter,

c)  the sheet metal strips are cut off and fastened,

d)  the wound sheet metal strips are fixed in a tubular casing of a predetermined inner diameter,

e)  the adhesive is hardened by heating.

2. A process as claimed in Claim 1, characterised in that the adhesive is applied onto raised points of the profiled sheet metal strips.

3. A process as claimed in Claim 1 having the following features:

a)  prior to winding, the sheet metal strips are passed through one or more containers in which the adhesive is present in liquid form.

4. A process as claimed in Claim 3 having the following features:

a)  the sheet metal strips are passed through a container which contains a carrier material in liquid form for the catalytically effective material.

5. A process as claimed in Claim 3 having the following features:

a)  both the sheet metal strips are passed through a container which contains a granular material as a suspension in a liquid.

6. A process as claimed in Claim 3 with the following features:

a)  the sheet metal strips are dried after removal from a container.

7. A catalyst body capable of being produced by a process as claimed in one of Claims 1 to 6.

## Revendications

1. Procédé de fabrication de corps de catalyseur enroulés en spirale, en bandes de tôle profilées, en matériaux stables à température élevée, remarquable par les caractéristiques suivantes:

a)  les bandes de tôle sont revêtues avant l'enroulement d'une colle stable à température élevée;

b)  les bandes de tôle sont enroulées en spirales jusqu'à un diamètre extérieur déterminé;

c)  les bandes de tôle sont découpées et assemblées;

d)  les bandes de tôle enroulées sont fixées dans un tube enveloppe de diamètre intérieur déterminé;

e)  la colle est durcie par chauffage.

2. Procédé suivant la revendication 1, caractérisé en ce que la colle est déposée sur les emplacements en relief des bandes de tôle profilées.

3. Procédé suivant la revendication 1 ayant les caractéristiques suivantes:

a)  les bandes de tôle sont guidées avant l'enroulement dans un récipient ou dans plusieurs récipients dans lesquels la colle se trouve sous forme liquide.

4. Procédé suivant la revendication 3 ayant les caractéristiques suivantes:

a)  les bandes de tôle sont guidées dans un récipient qui contient sous forme liquide un matériau support pour la substance active catalytiquement.

5. Procédé suivant la revendication 3 ayant les caractéristiques suivantes:

a)   les deux bandes de tôle sont guidées dans
     un récipient qui contient dans un liquide une
     substance granuleuse sous forme de suspension.

6. Procédé suivant la revendication 3 ayant les
caractéristiques suivantes:

a)   après être sorties d'un récipient, les bandes
     de tôle sons séchées.

7. Corps de catalyseur pouvant être fabriqué
par un procédé suivant l'une des revendications
1 à 6.

FIG 1

FIG 2

FIG 3

FIG 4